# EUROPEAN PATENT APPLICATION

(11) **EP 4 672 762 A1**
(43) Date of publication of application: **31.12.2025**
(21) Application number: 24759623.2
(22) Date of filing: 18.02.2024
(51) Int. Cl.: H04N 21/431, H04N 21/2187, H04N 21/478

(54) **PAGE DISPLAY METHOD AND APPARATUS, AND ELECTRONIC DEVICE, STORAGE MEDIUM AND PROGRAM PRODUCT**

(30) Priority: 24.02.2023 CN 202310165873
(71) Applicant: Chengdu Guanghexinhao Technology Co., Ltd., Chengdu, Sichuan 610095 (CN)
(72) Inventor: WANG, Wenjun, Beijing 100028 (CN); WU, Hanfei, Beijing 100028 (CN); CHEN, Chen, Beijing 100028 (CN); LI, Qianwen, Beijing 100028 (CN)
(74) Representative: Grünecker Patent- und Rechtsanwälte PartG mbB
(86) International application number: PCT/CN2024/077439
(87) International publication number: WO 2024/174946

(57) **Abstract**

The present disclosure relates to a method, an apparatus, an electronic device, a storage medium and a program product of page displaying. The method includes: displaying a live stream page of a first live stream, an aggregation portal control being presented on the live stream page of the first live stream, and the first live stream being associated with at least one first object; and displaying a live stream aggregation page in response to a trigger operation on the aggregation portal control, a live stream identification of at least one second live stream being presented on the live stream aggregation page, and the at least one second live stream being associated with at least one second object, which is an object that meets a preset regional condition.

## Description

This application claims priority to Chinese Patent Application No. 202310165873.7, filed on February 24, 2023 and entitled "METHOD, APPARATUS, ELECTRONIC DEVICE, STORAGE MEDIUM AND PROGRAM PRODUCT OF PAGE DISPLAYING", the disclosure of which is incorporated herein by reference in its entirety.

### FIELD

The present disclosure relates to the field of video technologies, and in particular to a method, an apparatus, an electronic device, a storage medium and a program product of page displaying.

### BACKGROUND

At present, recommending objects to users through videos from live streams to achieve transfer of the objects has been accepted by more and more users.

However, the existing interaction solutions related to recommendation of the objects in live streams cannot meet users' needs.

### SUMMARY

The present disclosure provides a method, an apparatus, an electronic device, a storage medium and a program product of page displaying.

In a first aspect, an embodiment of the present disclosure provides a method of page displaying. The method includes: displaying a live stream page of a first live stream, an aggregation portal control being presented on the live stream page of the first live stream, and the first live stream being associated with at least one first object; and displaying a live stream aggregation page in response to a trigger operation on the aggregation portal control, a live stream identification of at least one second live stream being presented on the live stream aggregation page, and the at least one second live stream being associated with at least one second object, which is an object that meets a preset regional condition.

In some embodiments of the present disclosure, the first object includes a first resource or the first object includes an object that provides a first resource, and the second object includes a second resource or the second object includes an object that provides a second resource.

In some embodiments of the present disclosure, a picture corresponding to the first object is presented on the live stream page of the first live stream, and a picture corresponding to the second object is presented on a live stream page of the second live stream.

In some embodiments of the present disclosure, in the live stream aggregation page, the live stream identification of the at least one second live stream is determined based on regional information corresponding to the second object associated with each second live stream.

In some embodiments of the present disclosure, a live stream type of the first live stream matches a live stream type of the second live stream, and an object type of the first object matches an object type of the second object.

In some embodiments of the present disclosure, in a case where the first live stream is associated with a plurality of first objects, a type of the first live stream is determined based on a type of each first object of the plurality of first objects; and for any second live stream, in a case where the any second live stream is associated with a plurality of second objects, a type of the any second live stream is determined based on a type of each second object of the plurality of second objects.

In some embodiments of the present disclosure, at an associated position of the live stream identification of any second live stream on the live stream aggregation page, an object identification of at least one second object associated with the any second live stream is displayed; and the object identification of the at least one second object is arranged based on regional information of each second object.

In some embodiments of the present disclosure, on the live stream aggregation page, the live stream identification of the at least one second live stream is arranged according to a preset scene type.

In some embodiments of the present disclosure, the method further includes: in response to a trigger operation on the object identification of any second object, displaying the live stream page of any second live stream corresponding to the any second object, and displaying the second resource, associated with the any second object, on the live stream page of the any second live stream.

In a second aspect, an embodiment of the present disclosure provides an apparatus of page displaying. The apparatus includes: a displaying module configured to display a live stream page of a first live stream, wherein an aggregation portal control is presented on the live stream page of the first live stream, and the first live stream is associated with at least one first object, wherein the displaying module is also configured to display a live stream aggregation page in response to a trigger operation on the aggregation portal control, a live stream identification of at least one second live stream is presented on the live stream aggregation page, and the at least one second live stream being associated with at least one second object, which is an object that meets a preset regional condition.

In some embodiments of the present disclosure, the first object includes a first resource or the first object includes an object that provides a first resource, and the second object includes a second resource or the second object includes an object that provides a second resource.

In some embodiments of the present disclosure, a picture corresponding to the first object is presented on the live stream page of the first live stream, and a picture corresponding to the second object is presented on a live stream page of the second live stream.

In some embodiments of the present disclosure, on the live stream aggregation page, the live stream identification of the at least one second live stream is determined based on regional information corresponding to the second object associated with each second live stream.

In some embodiments of the present disclosure, a live stream type of the first live stream matches a live stream type of the second live stream, and an object type of the first object matches an object type of the second object.

In some embodiments of the present disclosure, in a case where the first live stream is associated with a plurality of first objects, a type of the first live stream is determined based on a type of each first object of the plurality of first objects; and for any second live stream, in a case where the any second live stream is associated with a plurality of second objects, a type of the any second live stream is determined based on a type of each second object of the plurality of second objects.

In some embodiments of the present disclosure, at an associated position of the live stream identification of any second live stream on the live stream aggregation page, an object identification of at least one second object associated with the any second live stream is displayed; and the object identification of the at least one second object is arranged based on regional information of each second object.

In some embodiments of the present disclosure, in the live stream aggregation page, the live stream identification of the at least one second live stream is arranged based on a preset scene type.

In some embodiments of the present disclosure, the displaying module is also configured to: in response to a trigger operation on the object identification of any second object, display the live stream page of any second live stream corresponding to the any second object, and display the second resource associated with the any second object on the live stream page of the any second live stream.

In a third aspect, an embodiment of the present disclosure provides an electronic device. The electronic device includes a processor, a memory and a computer program stored in the memory and runnable on the processor, wherein the computer program, when executed by the processor, implements the method of page displaying as described in the first aspect.

In a fourth aspect, an embodiment of the present disclosure provides a computer-readable storage medium having a computer program stored therein, wherein the computer program, when executed by a processor, implements the method of page displaying as described in the first aspect.

In a fifth aspect, an embodiment of the present disclosure provides a computer program product, wherein the computer program product includes a computer program, and the computer program product, when running on a processor, causes the processor to execute the computer program, so as to implement the method of page displaying as described in the first aspect.

In a sixth aspect, an embodiment of the present disclosure provides a chip, including a processor and a communication interface, wherein the communication interface is coupled to the processor, and the processor is configured to run a program instruction, so as to implement the method of page displaying as described in the first aspect.

### BRIEF DESCRIPTION OF THE SEVERAL VIEWS OF THE DRAWINGS

The accompanying drawings, which are incorporated in and constitute a part of the description, illustrate embodiments consistent with the present disclosure and, together with the description, serve to explain the principles of the present disclosure.

In order to describe the technical solutions in embodiments of the present disclosure or in the prior art more clearly, the drawings required for illustration of embodiments or the prior art will be briefly introduced below. Obviously, for those of ordinary skill in the art, other drawings may also be obtained from these drawings without any creative effort.
FIG. 1 is a first schematic flowchart of a method of page displaying according to an embodiment of the present disclosure;
FIG. 2 is a first schematic diagram of an interface for the method of page displaying according to an embodiment of the present disclosure;
FIG. 3A is a second schematic diagram of the interface for the method of page displaying according to an embodiment of the present disclosure;
FIG. 3B is a third schematic diagram of the interface for the method of page displaying according to an embodiment of the present disclosure;
FIG. 4 is a second schematic flowchart of the method of page displaying according to an embodiment of the present disclosure;
FIG. 5 is a third schematic flowchart of the method of page displaying according to an embodiment of the present disclosure;
FIG. 6 is a fourth schematic diagram of the interface for the method of page displaying according to an embodiment of the present disclosure;
FIG. 7 is a fifth schematic diagram of the interface for the method of page displaying according to an embodiment of the present disclosure;
FIG. 8 is a structure block diagram of a page display apparatus according to an embodiment of the present disclosure; and
FIG. 9 is a structure block diagram of an electronic device according to an embodiment of the present disclosure.

### DETAILED DESCRIPTION

For a clearer understanding of the above objectives, features and advantages of the present disclosure, the solutions of the present disclosure will be further described below. It should be noted that, without conflict, embodiments of the present disclosure and the features in embodiments can be combined with each other.

While many specific details are set forth in the following descriptions to facilitate a full understanding of the present disclosure, the present disclosure may be implemented in other ways than those described herein. Obviously, embodiments in the description are only part rather than all of embodiments of the present disclosure.

The terms "first", "second" and the like in the description and claims of the present disclosure are used for the purpose of distinguishing similar objects instead of describing a particular order or sequence. It should be understood that data used in this way are interchangeable where appropriate, such that embodiments of the present disclosure can be implemented in a sequence other than those illustrated or described herein. The objects distinguished by "first", "second" and the like are usually of the same type, and the number of the objects is not limited. For example, there may be one or a plurality of first objects. In addition, the term "and/or" in the description and claims indicates at least one of the connected objects, and the character "/" generally indicates an "or" relationship between the contextual objects.

In the related art, in the process of watching live videos from a live stream, when a user sees a recommended object that needs to be transferred, he/she can complete the transfer of the object through a series of operations if the object meets a preset regional condition. However, in some cases, the transfer of the object cannot be completed since the object does not meet the preset regional condition, resulting in a poor user experience.

In an embodiment of the present disclosure, an electronic device may be a mobile electronic device or a non-mobile electronic device. The mobile electronic device may be a mobile phone, a tablet computer, a laptop, a palmtop computer, a vehicle-mounted electronic device, a wearable device, an ultra-mobile personal computer (UMPC), a netbook, a personal digital assistant (PDA) or the like; the non-mobile electronic device may be a personal computer (PC), a television (TV), an ATM, a self-service machine or the like; and these will not be specifically limited in embodiments of the present disclosure.

According to an embodiment of the present disclosure, an executive subject of a method of page displaying may be the above-mentioned electronic device (including the mobile electronic device and the non-mobile electronic device), or a functional module and/or functional entity in the electronic device that can implement the method of page displaying, which can be specifically determined according to actual use requirements and will not be limited in embodiments of the present disclosure.

In the following, the method of page displaying according to embodiments of the present disclosure will be described in detail through specific embodiments and application scenarios thereof with reference to the accompanying drawings.

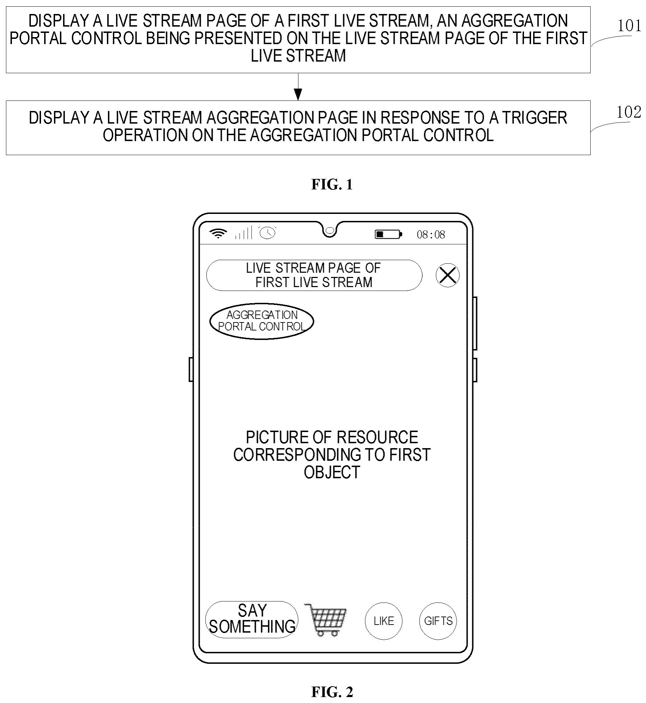

As shown in FIG. 1, an embodiment of the present disclosure provides a method of page displaying. The method may include the following steps 101 to 102.

In 101, an electronic device displays a live stream page of a first live stream, an aggregation portal control being presented on the live stream page of the first live stream.

The first live stream is associated with at least one first object.

The live stream page may be an interface for presenting a streaming video of the first live stream, which is not specifically limited.

In some embodiments of the present disclosure, the first object includes a first resource or the first object includes an object that provides a first resource.

The live stream is an e-commerce related live stream, and the first object may include a first resource, which may be a commodity, for example, food, clothes, etc. The first object may also include an object that provides a first resource. When the first resource is a commodity, the first object may be a merchant, a store, etc. that provides the commodity. The transfer of the object may be the transfer of the resource, such as purchase of the commodities. The first live stream is associated with at least one first object, which can be understood as the first object being an object promoted and presented in the first live stream.

In some embodiments of the present disclosure, the aggregation portal control is configured to indicate an entry of a live stream aggregation page. A user may trigger to display the live stream aggregation page by a trigger operation on the aggregation portal control. The live stream aggregation page is configured to display a live stream identification of at least one second live stream associated with the live stream page of the first live stream. The aggregation portal control may be located at any position on the live stream page of the first live stream. For example, the aggregation portal control may be located at a top left corner of the live stream page of the first live stream, and the aggregation portal control may also be located at a top right corner of the live stream page of the first live stream, which can be specifically determined according to actual situations and is not limited herein.

In 102, the electronic device displays a live stream aggregation page in response to a trigger operation on the aggregation portal control.

In some embodiments, the live stream aggregation page presents a live stream identification of at least one second live stream, the at least one second live stream is associated with at least one second object, the second object may be an object that meets a preset regional condition, and the second object includes a second resource or an object that provides a second resource. That is, the second object may include a second resource, which may be a commodity, for example, food, clothes, etc.; and the second object may also include an object that provides a second resource, and when the second resource is a commodity, the second object may be a merchant, a store, etc. that provides the commodity.

In some embodiments, the live stream aggregation page may present live stream identifications of a plurality of second live streams, and the plurality of second live streams may be different live streams. Each second live stream may be associated with one or more second objects.

In some embodiments, the trigger operation on the aggregation portal control is a trigger operation on the aggregation portal control by the user, and correspondingly, the preset regional condition is an regional condition related to the user, such as a region where the user is located or a region set by the user, which can be determined according to actual situations and is not limited herein. The second object may be an object that meets the preset regional condition, for example, the second object is an object provided in the region where the user is located or an object provided in the region set by the user. When the second object includes a second resource, the second object is a resource available for transfer, provided in the region where the user is located, such as a commodity sold in the region where the user is located, or the second object is an object available for transfer, provided in the region set by the user, such as a commodity sold in the region set by the user. Therefore, it is convenient for the user to efficiently obtain the object that meets the preset regional condition, thereby improving the user experience.

In some embodiments, a reference may be made to the above descriptions related to the first live stream and the first object for descriptions of the second live stream and the second object, which will not be repeated herein.

In some embodiments, the live stream identification may be a name of the live stream page, a cover of the live stream page, an avatar of the live stream page, or an account of the live stream, which can be determined according to actual situations and is not limited herein.

For example, the live stream identification of the first live stream may be a name of the first live stream page, a cover of the first live stream page, an avatar of the first live stream page, or an account of the first live stream; and the live stream identification of the second live stream may be a name of the second live stream page, a cover of the second live stream page, an avatar of the second live stream page, or an account of the second live stream.

It can be understood that any second live stream is not associated with objects other than at least one second object that meets the preset regional condition, or is also associated with at least one object that does not meet the preset regional condition, which is not limited herein.

In an embodiment of the present disclosure, by adding presentation of the aggregation portal control to the live stream page of the first live stream, the live stream aggregation page may be triggered for display through the trigger operation on the aggregation portal control. The live stream identification of at least one second live stream page is aggregated on the live stream aggregation page, and each second live stream page is associated with at least one second object that meets the preset regional condition, such that the user, who is interested in the first resource corresponding to the first object but not able to achieve rapid transfer of the first resource, can find the second object that meets the preset regional condition from each second live stream page indicated by the live stream identification of at least one second live stream page presented on the live stream aggregation page, so as to achieve the rapid transfer of the resource corresponding to the second object. Therefore, in embodiments of the present disclosure, by adding presentation of the aggregation portal control to the first live stream page, more ways are provided to recommend the resource to the user, which can improve the user experience.

In some embodiments of the present disclosure, the above-mentioned step 102 may specifically include: displaying, in an unfolded manner, the live stream aggregation page with a preset animation effect in response to a trigger operation on the aggregation portal control. The preset animation effect may be determined according to actual situations and is not limited herein. For example, when the aggregation portal control is located at the top left corner of the live stream page of the first live stream, the live stream aggregation page is displayed, in an unfolded manner, from the bottom up from the bottom of the live stream page of the first live stream in response to the trigger operation on the aggregation portal control. For example, when the aggregation portal control is located at the top right corner of the live stream page of the first live stream, the live stream aggregation page is displayed, in an unfolded manner, from right to left from a right side of the live stream page of the first live stream in response to the trigger operation on the aggregation portal control.

In some embodiments of the present disclosure, a picture corresponding to the first object is presented on the live stream page of the first live stream, and a picture corresponding to the second object is presented on a live stream page of the second live stream.

In some embodiments, the picture corresponding to the first object may be a picture of the first resource (such as a commodity picture and a commodity image) or a picture of an object that provides the first resource (such as a store picture and a store image).

As an example, when the first object includes a first resource, a picture of the first resource or a picture of an object that provides the first resource is presented on the live stream page of the first live stream; and when the second object includes a second resource, a picture of the second resource or a picture of an object that provides the second resource is presented on the live stream page of the second live stream.

As an example, when the first object includes an object that provides a first resource, a picture of the first resource or a picture of an object that provides the first resource is presented on the live stream page of the first live stream; and when the second object includes an object that provides a second resource, a picture of the second resource or a picture of an object that provides the second resource is presented on the live stream page of the second live stream.

In an embodiment of the present disclosure, a plurality of cases is provided in which the picture corresponding to the object associated with the live stream is presented on the live stream page, which can improve the user experience.

In some embodiments of the present disclosure, the live stream identification of the at least one second live stream in the live stream aggregation page may be arranged randomly or in a preset arrangement mode, which can be determined according to actual situations and is not limited herein.

In some embodiments of the present disclosure, in the live stream aggregation page, the live stream identification of the at least one second live stream is determined according to regional information corresponding to the second object associated with each second live stream.

It can be understood that which live stream identifications of the second live streams are specifically presented on the live stream aggregation page can be determined according to the degree of match between a target object associated with each second live stream of a plurality of candidate second live streams and the preset regional condition. For example, in a case where the degree of match between the target object associated with any candidate second live stream of the plurality of candidate second live streams and the preset regional condition is greater than a preset threshold, the live stream identification of the any candidate second live stream is displayed on the live stream aggregation page. In addition, when the live stream identifications of a plurality of second live streams are specifically presented on the live stream aggregation page, the arrangement mode of the live stream identifications of the plurality of second live streams may also be determined according to the degree of match corresponding to each second live stream (the degree of match between the target object associated with each second live stream and the preset regional condition). The target object is an object that matches the preset regional condition to the greatest extent among at least one second object associated with each second live stream.

In an embodiment of the present disclosure, the second object that matches the preset regional condition to the greatest extent among the second objects, which meet the preset regional condition and are presented in each second live stream page, is determined as the target object, and then the live stream identifications of each second live stream are arranged in descending order according to the degree of match between the corresponding target object and the preset regional condition, that is, the live stream identification of the second live stream corresponding to the target object that matches the preset regional condition to a great extent is ranked ahead, and the live stream identification of the second live stream corresponding to the target object that matches the preset regional condition to a small extent is ranked behind. In this way, the live stream identifications of each second live stream are ranked according to the degree of match between the target object and the preset regional condition, such that the user can first see the target object that matches the preset regional condition to the greatest extent in each second live stream, and then determine therefrom an object (an object corresponding to a final required resource, a resource corresponding to the object can be obtained by means of rapid transfer) that can replace the first object, so as to complete transfer of the required resource.

In some embodiments of the present disclosure, the second object may also meet the following condition: a transfer quantity of the second resource corresponding to the second object within a preset duration is greater than or equal to a transfer threshold. The second object may also meet other conditions, which can be determined according to actual situations and is not limited herein.

In some embodiments, the transfer quantity is a purchase quantity, and the transfer threshold is a purchase quantity threshold. The preset duration and the transfer threshold may be determined according to actual situations, neither of which is limited herein. The greater the transfer quantity of the resource is, the higher the popularity of the resource is, and the higher the user's demand for the second object is. Therefore, the second object also meets the condition that the transfer quantity of the second resource corresponding to the second object within the preset duration is greater than or equal to the transfer threshold, such that an object corresponding to the resource with higher popularity can be recommended for the user to replace the first object, which can improve the user's satisfaction and the success rate of object recommendation.

In some embodiments of the present disclosure, a live stream type of the first live stream matches a live stream type of the second live stream, and an object type of the first object matches an object type of the second object. In this way, a plurality of second live streams matching the live stream type of the first live stream and a plurality of second objects matching the object type of the first object can be recommended for the user through the live stream aggregation page corresponding to the aggregation portal control, such that the user can obtain a more satisfactory resource corresponding to the second object.

In some embodiments, the object type of the first object matches the object type of the second object. In a case where the first live stream is associated with a plurality of first objects and one second live stream is associated with a plurality of second objects, the object type of the first object matching the object type of the second object may mean that the object types of the plurality of first objects match the object types of the plurality of second objects one by one, or that the object types of more than a preset number of first objects match the object types of more than a preset number of second objects, for example, the object types of at least two first objects of the plurality of first objects match the object types of at least two second objects of the plurality of second objects.

In some embodiments, the live stream type of the first live stream matches the live stream type of the second live stream, and the live stream type of one live stream is determined according to the object type of each object corresponding to the live stream, and specifically may be determined according to the proportion of each object type. The object type is a resource type corresponding to the object. In a case where one live stream is associated with a plurality of objects, the object type with the greatest proportion may be taken as the live stream type. For example, if the live stream is associated with 3 objects of an object type A, and 1 object of an object type B, the object type A with the greater proportion may be taken as the live stream type.

In some embodiments of the present disclosure, in a case where the first live stream is associated with a plurality of first objects, the type of the first live stream is determined according to the type of each first object of the plurality of first objects; and for any second live stream, in a case where the any second live stream is associated with a plurality of second objects, the type of the any second live stream is determined according to the type of each second object of the plurality of second objects.

It can be understood that the live stream type can be determined according to the type corresponding to the object associated with each live stream. For example, the live stream type can be determined according to the proportion of the type of each object associated with the live stream.

As an example, taking the object being a commodity resource as an example, the live stream type may be defined as follows:
if a plurality of commodities corresponding to the live stream are divided into at least one category, and the proportion of A-category commodities (the ratio of the number of A-category commodities to the number of all commodities in the live stream) is greater than or equal to 80% (the A-category commodities account for the greatest proportion), the live stream type of the current live stream is defined as A-category; and if a plurality of commodities corresponding to the live stream are divided into a plurality of categories, and the proportion of commodities of each category is less than 80%, the live stream type of the current live stream is defined as a comprehensive category.

In some embodiments, the live stream type of each second live stream matches the live stream type of the first live stream, which can be understood as that the live stream type of each second live stream is the same as that of the first live stream, or that the live stream type (a second-class category) of each second live stream belongs to the live stream type (a first-class category) of the first live stream, or that the live stream type (a first-class category) of each second live stream includes the live stream type (a second-class category) of the first live stream, which can be determined according to actual situations and is not limited herein.

As an example, the first-class category may include a food category, a tourism category, a beauty category, etc., and the second-class category corresponding to the food category may include a specialty snack category, a pastry category, a fast-food category, etc. The second-class category belongs to the first-class category, for example, the specialty snack category belongs to the food category.

In some embodiments of the present disclosure, the name of the aggregation portal control may be determined according to the live stream type. For example, the name of the aggregation portal control is "local food bazaar" if the live stream type is the food category; the name of the aggregation portal control is "surrounding popular destinations" if the live stream type is the tourism category; and the name of the aggregation portal control is "local gourmet and amusement" if the live stream type is the comprehensive category. In this way, the name of the aggregation portal control is differentiated according to the live stream type, which can improve the user experience.

In an embodiment of the present disclosure, the live stream type of each second live stream matches the live stream type of the first live stream, such that the second object that meets the user's needs can be determined to replace the first object according to the live stream identification of at least one second live stream aggregated on the live stream aggregation page, which can improve the user's satisfaction and the efficiency of object recommendation.

In some embodiments of the present disclosure, a plurality of type controls is also presented on the live stream aggregation page, and each type control is configured to indicate one live stream type. The live stream type of each second live stream is the same as the live stream type indicated by the currently selected type control among the plurality of type controls. The live stream type of one second live stream is determined according to the object type of each second object associated with the second live stream.

In an embodiment of the present disclosure, the plurality of type controls may include a first-class category control and/or a second-class category control, and the users can select a target type control from the plurality of type controls according to their own needs, then trigger to update the live stream identification of at least one second live stream displayed on the live stream aggregation page, into at least one live stream identification corresponding to the target type control (each live stream identification is intended to indicate one third live stream), and after that, find the resource corresponding to the object that meets the user's needs from the live stream identification corresponding to the target type control for transfer. In this way, more choices can be provided to the user through the type control to facilitate the user to quickly find the object that meets the needs, which can improve the user's satisfaction and the success rate of object recommendation.

In some embodiments of the present disclosure, at an associated position of the live stream identification of any second live stream on the live stream aggregation page, an object identification of at least one second object associated with the any second live stream is displayed; and the object identification of the at least one second object is arranged according to regional information of each second object.

It can be understood that on the live broadcast room aggregation page, at least one object identification corresponding to the target live stream identification is also presented at an associated position of the target live stream identification, and the target live stream identification is any one of the live stream identifications of the at least one second live stream. Each object identification is intended to indicate one second object that meets the preset regional condition, and the at least one object identification is arranged according to the degree of match between the second object indicated by each object identification and the preset regional condition.

In some embodiments, the object identification may be a name of the object and a picture of the object, and may further include other contents, which is not limited herein.

It can be understood that on the live stream aggregation page, in addition to the live stream identification of at least one second live stream, at least one object identification (the object identification of at least one second object) is also presented in a region where the live stream identification of each second live stream is located, and the at least one object identification is arranged in descending order according to the degree of match between the second object indicated by each object identification and the preset regional condition. That is, the higher the degree of match between the second object indicated by the object identification and the preset regional condition is, the higher the ranking of the object identification is, and the lower the degree of match between the second object indicated by the object identification and the preset regional condition is, the lower the ranking of the object identification is, such that it is convenient for the user to find the second object that meets the user's needs, which can improve the user's satisfaction and the efficiency of object recommendation. The degree of match may be determined according to the distance between a region corresponding to the second object and a region where the user is located or an regional set by the user.

In some embodiments of the present disclosure, on the live stream aggregation page, the number of at least one object identification presented in a region where the live stream identification of each second live stream is located may be the same or different, which is not limited herein.

In some embodiments of the present disclosure, on the live stream aggregation page, the live stream identification of the at least one second live stream is arranged according to a preset scene type.

In some embodiments, the preset scene type may be a bazaar scene type (arranged left and right in multiple columns or arranged in a streamlined and staggered manner), and a preset scene may also be a sequential arrangement scene or other scenes, which is not limited herein.

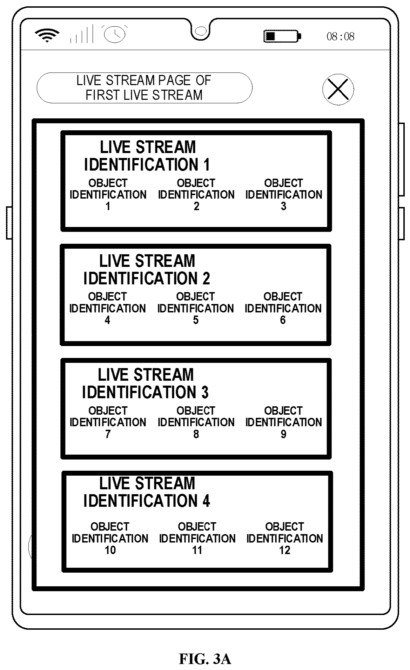

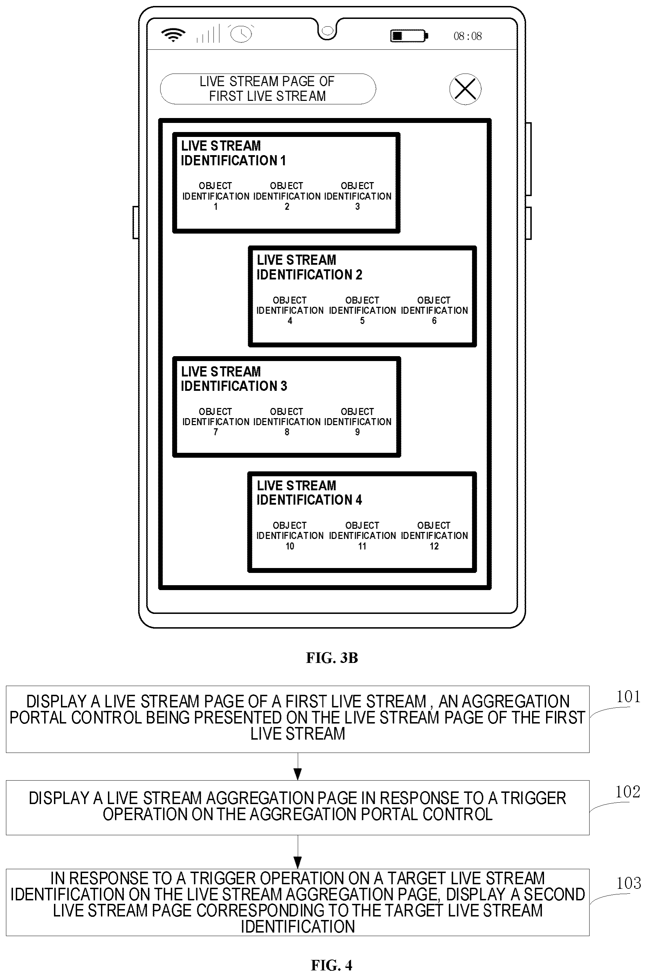

As an example, as shown in FIG. 2, the picture of the resource corresponding to the first object is presented on the live stream page of the current first live stream, the aggregation portal control is presented at the top left corner of the live stream page of the first live stream, and transfer related information of the resource corresponding to the first object is also presented on the live stream page of the first live stream. The live stream aggregation page as shown in FIG. 3A or FIG. 3B is displayed in response to the trigger operation on the aggregation portal control. The live stream aggregation page includes a live stream identification 1, a live stream identification 2, a live stream identification 3 and a live stream identification 4 (four live stream identifications of the second live stream in total). The live stream identification 1 includes object identifications 1 to 3 (each object identification is intended to indicate one second object). The live stream identification 2 includes object identifications 4 to 6 (each object identification is intended to indicate one second object). The live stream identification 3 includes object identifications 7 to 9 (each object identification is intended to indicate one second object). The live stream identification 4 includes object identifications 10 to 12 (each object identification is intended to indicate one second object). As shown in FIG. 3A, a plurality of live stream identifications is sequentially displayed side by side. As shown in FIG. 3B, a plurality of live stream identifications is arranged in a streamlined and staggered manner, which can meet the user's expectation and improve the user experience.

In some embodiments of the present disclosure, as shown in FIG. 4 with reference to FIG. 1, after step 102, the method of page displaying according to embodiments of the present disclosure may further include the following step 103.

In 103, the electronic device displays, in response to a trigger operation on a target live stream identification on the live stream aggregation page, a second live stream page corresponding to the target live stream identification.

In some embodiments, the target live stream identification is one of the live stream identifications of the at least one second live stream. The second live stream page currently presents the aggregation portal control and a picture corresponding to one second object associated with the second live stream.

In an embodiment of the present disclosure, the user may trigger to enter the corresponding second live stream page by clicking on one live stream identification on the live stream aggregation page, which can improve the user experience.

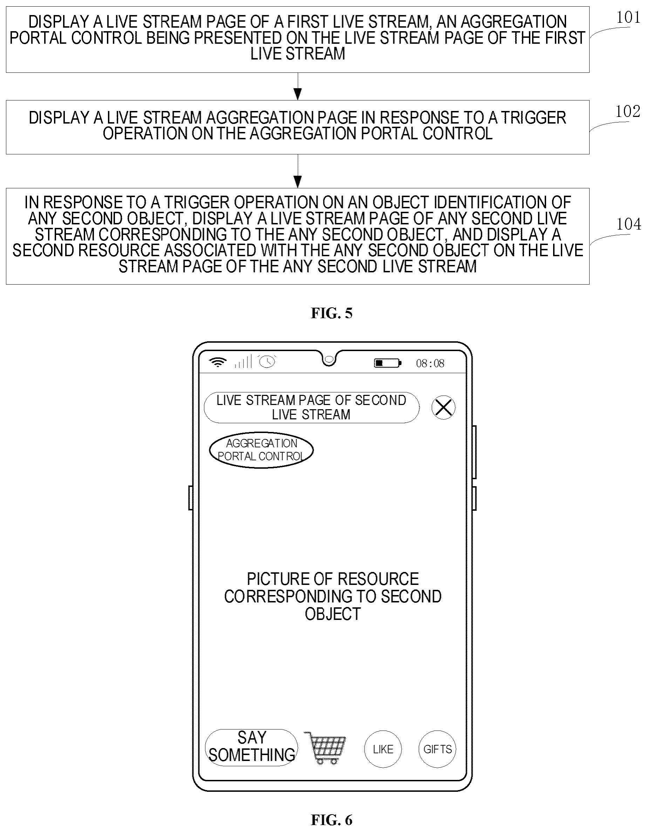

In some embodiments of the present disclosure, as shown in FIG. 5 with reference to FIG. 1, after step 102, the method of page displaying according to embodiments of the present disclosure may further include the following step 104.

In 104, the electronic device displays, in response to a trigger operation on the object identification of any second object, the live stream page of any second live stream corresponding to the any second object, and displays the second resource associated with the any second object on the live stream page of the any second live stream.

It can be understood that the live stream page of the corresponding second live stream is displayed in response to the trigger operation on the object identification of any second object, and a picture of a second resource corresponding to the any second object is displayed on the live stream page.

In an embodiment of the present disclosure, the live stream page of the corresponding second live stream may be triggered for display by a trigger operation on one object identification in the live stream aggregation page, and the picture of the second resource corresponding to the any second object may be displayed on the live stream page of the second live stream, such that the user experience can be improved.

In some embodiments of the present disclosure, an object list page of at least one second object associated with the second live stream may also be displayed on the live stream page of the second live stream in response to the trigger operation on the object identification of any second object.

In some embodiments, the object list page currently presents detailed information of each second object associated with the second live stream and meeting the preset regional condition. The detailed information of the second object may include the name of the object, the picture of the object, the transfer information of the resource corresponding to the object, etc.

In an embodiment of the present disclosure, by clicking on one live stream identification or one object identification on the live stream aggregation page, the user may trigger to display the live stream page of the corresponding second live stream, the picture of the resource corresponding to one second object, and the object list page of each second object associated with the second live stream, such that the operation efficiency in displaying the second object and the user experience can be improved.

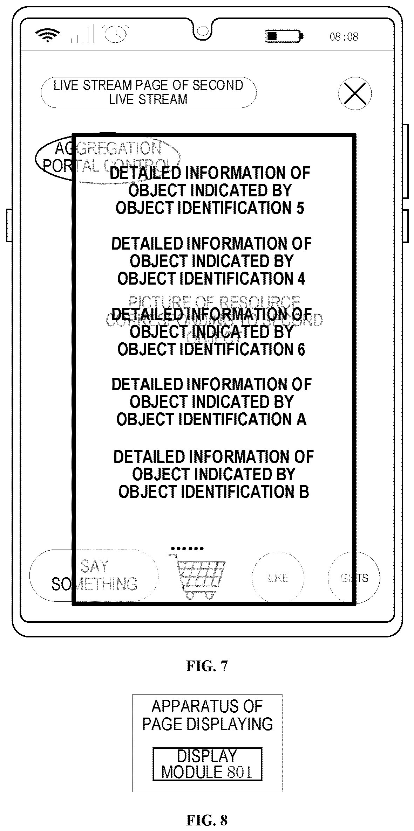

As an example, the user clicks on the live stream identification 2 in FIG. 3, as shown in FIG. 6, to update the live stream page of the first live stream into the live stream page of one second live stream (the live stream page of the second live stream corresponding to the live stream identification 2). The user clicks on the object identification 5 in FIG. 3, as shown in FIG. 7, to update the live stream page of the first live stream into the live stream page of another second live stream (the picture of the second resource corresponding to the currently displayed object identification 5), and to display the object list page on the live stream page of the another second live stream in a superimposed manner. The object list page includes detailed information of each second object associated with the another second live stream, and the detailed information of the second object indicated by the object identification 5 is displayed at the top of the object list page.

FIG. 8 is a structure block diagram of a page display apparatus according to an embodiment of the present disclosure. As shown in FIG. 8, the page display apparatus includes a displaying module 801 configured to display a live stream page of a first live stream. An aggregation portal control is presented on the live stream page of the first live stream. The first live stream is associated with at least one first object. The displaying module 801 is also configured to display a live stream aggregation page in response to a trigger operation on the aggregation portal control. A live stream identification of at least one second live stream is presented on the live stream aggregation page. The at least one second live stream is associated with at least one second object, which is an object that meets a preset regional condition.

In some embodiments of the present disclosure, the first object includes a first resource or the first object includes an object that provides a first resource, and the second object includes a second resource or the second object includes an object that provides a second resource.

In some embodiments of the present disclosure, a picture corresponding to the first object is presented on the live stream page of the first live stream, and a picture corresponding to the second object is presented on a live stream page of the second live stream.

In some embodiments of the present disclosure, on the live stream aggregation page, the live stream identification of the at least one second live stream is determined according to regional information corresponding to the second object associated with each second live stream.

In some embodiments of the present disclosure, a live stream type of the first live stream matches a live stream type of the second live stream, and an object type of the first object matches an object type of the second object.

In some embodiments of the present disclosure, in a case where the first live stream is associated with a plurality of first objects, the type of the first live stream is determined according to the type of each first object of the plurality of first objects; and for any second live stream, in a case where the any second live stream is associated with a plurality of second objects, the type of the any second live stream is determined according to the type of each second object of the plurality of second objects.

In some embodiments of the present disclosure, at an associated position of the live stream identification of any second live stream on the live stream aggregation page, an object identification of at least one second object associated with the any second live stream is displayed; and the object identification of the at least one second object is arranged according to regional information of each second object.

In some embodiments of the present disclosure, on the live stream aggregation page, the live stream identification of the at least one second live stream is arranged according to a preset scene type.

In some embodiments of the present disclosure, the displaying module 801 is also configured to: in response to a trigger operation on the object identification of any second object, display the live stream page of any second live stream corresponding to the any second object, and display the second resource, associated with the any second object, on the live stream page of the any second live stream.

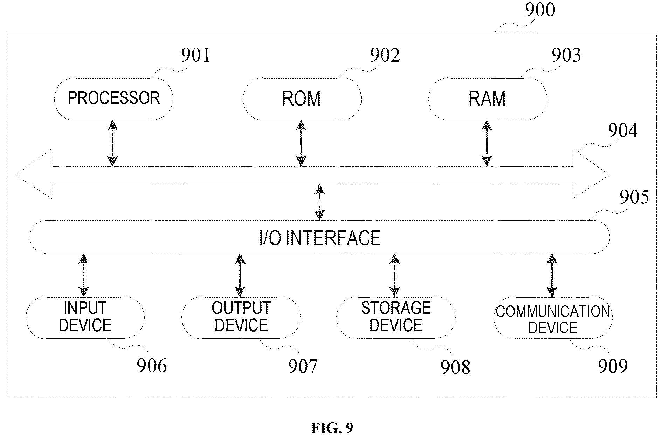

Fig. 9 shows a schematic diagram of an electronic device according to an embodiment of the present disclosure. This electronic device only serves as an exemplary description of the electronic device for implementing any method of page displaying of embodiments of the present disclosure, and should not be understood as a specific limitation of embodiments of the present disclosure.

As shown in Fig. 9, the electronic device 900 may include a processing apparatus (such as a central processing unit, a graphics processing unit, or the like) 901 that may perform various appropriate actions and processing according to a program stored in a read-only memory (ROM) 902 or a program loaded from a storage apparatus 908 into a random-access memory (RAM) 903. In the RAM 903, various programs and data required for operation of the electronic device are further stored. The processing apparatus 901, the ROM 902, and the RAM 903 are connected to each other by using a bus 904. An input/output (I/O) interface 905 is also connected to the bus 904.

Generally, the following apparatuses may be connected to the I/O interface 905: input apparatuses 906 including, for example, a touchscreen, a touchpad, a keyboard, a mouse, a camera, a microphone, an accelerometer, and a gyroscope; output apparatuses 907 including, for example, a liquid crystal display (LCD), a loudspeaker and a vibrator; storage apparatuses 908 including, for example, a tape or a hard disk; and a communications apparatus 909. The communications apparatus 909 may allow the electronic device to communicate wirelessly or wiredly with another device to exchange data. Although the electronic device 900 is shown to include various apparatuses, it should be understood that it is not required to implement or provide all shown apparatuses. Alternatively, more or fewer apparatuses may be implemented or provided.

In particular, according to embodiments of the present disclosure, the process described above with reference to the flowchart may be implemented as a computer software program. For example, an embodiment of the present disclosure includes a computer software program product that includes a computer program carried on a readable medium, and the computer program includes program codes used to perform the method shown in the flowchart. In such an embodiment, the computer program may be downloaded and installed from a network by using the communications apparatus 909, installed from the storage apparatus 908, or installed from the ROM 902. When the computer program is executed by the processing apparatus 901, the foregoing functions defined in the method in embodiments of the present disclosure are executed.

It should be noted that the foregoing computer-readable medium in the present disclosure may be a computer-readable signal medium, a computer-readable storage medium, or any combination of the two. The computer-readable storage medium may be, for example, an electrical, magnetic, optical, electromagnetic, infrared, or semiconductor system, apparatus, or device, or any combination thereof. More specific examples of the computer-readable storage medium may include but are not limited to: an electrical connection having one or more conducting wires, a portable computer disk, a hard disk, a random-access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof. In the present disclosure, the computer-readable storage medium may be any tangible medium that includes or stores a program, and the program may be used by or in combination with an instruction execution system, apparatus, or device. In the present disclosure, the computer-readable signal medium may include a data signal propagated in a baseband or as a part of a carrier, which carries computer-readable program codes. Such a propagated data signal may be in multiple forms, including but not limited to an electromagnetic signal, an optical signal, or any suitable combination thereof. The computer-readable signal medium may further be any computer-readable medium other than the computer-readable storage medium, and the computer-readable signal medium may send, propagate, or transmit a program that is used by or in combination with an instruction execution system, apparatus, or device. The program code included in the computer-readable medium may be transmitted by using any suitable medium, including but not limited to: a wire, an optical cable, a radio frequency (RF), or any suitable combination thereof.

In some embodiments, the client and the server can communicate by using any currently known or future-developed network protocol, for example, an HTTP (Hyper Text Transfer Protocol), and can be interconnected by a communication network of any form or any medium. Examples of the communication network include a local area network (LAN), a wide area network (WAN), an internet network (for example, the Internet), and an end-to-end network (for example, an ad hoc end-to-end network), and any currently known or future-developed network.

The above computer readable medium may be included in the foregoing electronic device, or may exist separately and not be assembled into the electronic device.

The above computer readable medium carries one or more programs, which, when executed by the electronic device, causes the electronic device to: display a live stream page of a first live stream, an aggregation portal control being presented on the live stream page of the first live stream, and the first live stream being associated with at least one first object; and display a live stream aggregation page in response to a trigger operation on the aggregation portal control, a live stream identification of at least one second live stream being presented on the live stream aggregation page, and the at least one second live stream being associated with at least one second object, which is an object that meets a preset regional condition.

In embodiments of the present disclosure, computer program codes for performing the operations of the present disclosure may be written in one or more programming languages or a combination thereof, such as object-oriented programming languages Java, Smalltalk, C++, and conventional procedural programming languages such as "C" or similar program design languages. The program codes may be executed completely on a user computer, partially on a user computer, as an independent package, partially on a user computer and partially on a remote computer, or completely on a remote computer or server. In cases involving a remote computer, the remote computer may be connected to a user computer through any type of network, including a local area network (LAN) or a wide area network (WAN), or may be connected to an external computer (for example, through the Internet by using an Internet service provider).

Flowcharts and block diagrams in the accompanying drawings illustrate possible architectures, functions, and operations of systems, methods, and computer program products according to various embodiments of the present disclosure. In this regard, each block in a flowchart or block diagram may represent a module, program segment, or part of code that includes one or more executable instructions for implementing a specified logical function. It should also be noted that in some alternative implementations, functions marked in the block may also occur in different order than those marked in the accompanying drawings. For example, two blocks represented in succession may actually be executed in substantially parallel, and they may sometimes be executed in a reverse order, depending on the functions involved. It should also be noted that each block in the block diagram and/or flowchart and a combination of blocks in the block diagram and/or flowchart may be implemented by using a dedicated hardware-based system that performs a specified function or operation, or may be implemented by using a combination of dedicated hardware and a computer instruction.

The units described in embodiments of the present disclosure may be implemented either by means of software or by means of hardware. The names of these units do not limit the units themselves under certain circumstances.

Various functions described herein above can be implemented by one or more hardware logic members. For example and without limitations thereto, an exemplary hardware logic member includes a field programmable gate array (FPGA), an application-specific integrated circuit (ASIC), an application-specific standard product (ASSP), a system-on-chip system (SOC), a complex programmable logic device (CPLD) or the like.

In the context of the present disclosure, a machine-readable medium may be a tangible medium that may contain or store a program for use by or in connection with an instruction execution system, apparatus or device. The machine-readable medium may be a machine-readable signal medium or a machine-readable storage medium. Machine-readable media may include, but are not limited to, electronic, magnetic, optical, electromagnetic, infrared, or semiconductor systems, apparatuses or devices, or any suitable combination of the foregoing. More specific examples of machine-readable storage media would include one or more wire-based electrical connections, portable computer disks, hard disks, random-access memories (RAMs), read-only memories (ROMs), erasable programmable read-only memories (EPROM or flash memories), fiber optics, portable compact disk read only memories (CD-ROMs), optical storage devices, magnetic storage devices, or any suitable combination of the foregoing.

The above description is only a preferred embodiment of the present disclosure and an illustration of the technical principles utilized. It should be understood by those skilled in the art that the scope of disclosure involved in the present disclosure is not limited to technical solutions formed by a particular combination of the above technical features, but also covers other technical solutions formed by any combination of the above technical features or their equivalent features without departing from the above disclosed concept, for example, a technical solution formed by interchanging the above features with (but not limited to) technical features with similar functions disclosed in the present disclosure.

Furthermore, while the operations are depicted using a particular order, this should not be construed as requiring that the operations be performed in the particular order shown or in sequential order of execution. Multitasking and parallel processing may be advantageous in certain environments. Similarly, while several specific implementation details are included in the above discussion, these should not be construed as limiting the scope of the present disclosure. Certain features described in the context of separate embodiments may also be implemented in combination in a single embodiment. Conversely, various features described in the context of a single embodiment may also be implemented in multiple embodiments, either individually or in any suitable sub-combination.

Although the present subject matter has been described using language specific to structural features and/or method logical actions, it should be understood that the subject matter limited in the appended claims is not necessarily limited to the particular features or actions described above. Rather, the particular features and actions described above are merely example forms of implementing the claims.

## Claims

1. A method of page displaying, comprising:
displaying a live stream page of a first live stream, an aggregation portal control being presented on the live stream page of the first live stream, and the first live stream being associated with at least one first object; and
displaying a live stream aggregation page in response to a trigger operation on the aggregation portal control, a live stream identification of at least one second live stream being presented on the live stream aggregation page, and the at least one second live stream being associated with at least one second object, which is an object that meets a preset regional condition.

2. The method of claim 1, wherein the first object comprises a first resource or the first object comprises an object that provides a first resource, and the second object comprises a second resource or the second object comprises an object that provides a second resource.

3. The method of claim 2, wherein a picture corresponding to the first object is presented on the live stream page of the first live stream, and a picture corresponding to the second object is presented on a live stream page of the second live stream.

4. The method of claim 2, wherein in the live stream aggregation page, the live stream identification of the at least one second live stream is determined based on regional information corresponding to the second object associated with each second live stream.

5. The method of claim 2, wherein a live stream type of the first live stream matches a live stream type of the second live stream, and an object type of the first object matches an object type of the second object.

6. The method of claim 5, wherein in a case where the first live stream is associated with a plurality of first objects, a type of the first live stream is determined based on a type of each of the plurality of first objects; and
for any second live stream, in a case where the any second live stream is associated with a plurality of second objects, a type of the any second live stream is determined based on a type of each of the plurality of second objects.

7. The method of claim 2, wherein at an associated position of the live stream identification of any second live stream on the live stream aggregation page, an object identification of at least one second object associated with the any second live stream is displayed; and the object identification of the at least one second object is arranged based on regional information of each second object.

8. The method of claim 7, wherein in the live stream aggregation page, the live stream identification of the at least one second live stream is arranged based on a preset scene type.

9. The method of claim 7, further comprising:
in response to a trigger operation on the object identification of any second object, displaying a live stream page of any second live stream corresponding to the any second object, and displaying the second resource associated with the any second object on the live stream page of the any second live stream.

10. An apparatus of page displaying, comprising:
a displaying module configured to display a live stream page of a first live stream, wherein an aggregation portal control is presented on the live stream page of the first live stream, and the first live stream is associated with at least one first object, and wherein
the displaying module is also configured to display a live stream aggregation page in response to a trigger operation on the aggregation portal control, a live stream identification of at least one second live stream is presented on the live stream aggregation page, and the at least one second live stream is associated with at least one second object, which is an object that meets a preset regional condition.

11. An electronic device, comprising a memory and a processor, wherein the memory is configured to store a computer program; and the processor is configured to carry out the method of page displaying according to any one of claims 1 to 9 when the computer program is invoked.

12. A computer-readable storage medium having a computer program stored therein, wherein the computer program, when executed by a processor, implements the method of page displaying according to any one of claims 1 to 9.

13. A computer program product having a computer program stored therein, wherein the computer program, when executed by a processor, implements the method of page displaying according to any one of claims 1 to 9.
